# EUROPEAN PATENT SPECIFICATION

(11) **EP 4 033 424 B1**
(45) Date of publication and mention of the grant of the patent: **08.10.2025**
(21) Application number: 21153312.0
(22) Date of filing: 25.01.2021
(51) Int. Cl.: G06Q 10/06

(54) **APPARATUS FOR DETERMINATION OF A PASSENGER STATUS; SYSTEM FOR DETERMINATION OF A PASSENGER STATUS, METHOD FOR DETERMINING A PASSENGER STATUS AND COMPUTER PROGRAM PRODUCT**
VORRICHTUNG ZUR BESTIMMUNG EINES PASSAGIERSTATUS; SYSTEM ZUR BESTIMMUNG EINES PASSAGIERSTATUS, VERFAHREN ZUR BESTIMMUNG EINES PASSAGIERSTATUS UND COMPUTERPROGRAMMPRODUKT
APPAREIL DE DÉTERMINATION DU STATUT D'UN PASSAGER, SYSTÈME DE DÉTERMINATION DU STATUT D'UN PASSAGER, PROCÉDÉ DE DÉTERMINATION DU STATUT D'UN PASSAGER ET PRODUIT PROGRAMME INFORMATIQUE

(43) Date of publication of application: 27.07.2022
(73) Proprietor: Hitachi, Ltd., Tokyo 100-8280 (JP)
(72) Inventor: SAKIKAWA, Shuichiro, London (GB); HARADA, Satoru, London (GB); SATO, Yutaka, Tokyo, 100-8280 (JP)
(74) Representative: MERH-IP Matias Erny Reichl Hoffmann Patentanwälte PartG mbB

(56) References cited:
- US-A1- 2020 169 846
- US-A1- 2020 279 203

## Description

The present subject matter in particular relates to an apparatus and a system for increasing the reliability of the determination of a passenger status preferably in a public transportation system. A corresponding system, method and computer program product are provided as well. The reliability is especially increased by the architecture of the apparatus and the system which can be used independently of external positioning systems such as global navigation satellite systems (GNSS) due to the installation of beacons directly located on facilities of public transport. Further aspects which serve to increase the reliability synergistically will become apparent from the following as well as additional technical advantages.

### Background

Prior art, such as PTL 1, describe a transportation management system, which allocate resources by monitoring the geospatial and topological locations of a passenger responsive to receiving a trip request. A trip management module matches a passenger with an available driver based in part on a comparison of the estimated times of arrival (ETA) of the passenger and the driver at the pickup location. A client positioning module monitors the passenger's progress through nodes and edges in a topological graph associated with the origin location based on radio signatures received at the passenger client device. A client ETA module calculates a rider ETA based on the passenger's rate of travel through the origin location represented by nodes in the topological graph. Responsive to determining that the passenger ETA and the driver ETA vary by over a threshold amount of time, the trip management module matches the passenger with a second available driver. PTL 2 discloses a method including: obtaining a signal strength sequence of signals detected by a user terminal during a travel route. The detected signals are originated from signal sources disposed at different locations in the travel route, and the different location includes one or more vehicles or one or more stops. The method further includes: extracting, from the signal strength sequence, a first sequence fragment corresponding to a signal transmitted by a signal source disposed at a vehicle; determining a travel time duration of the user riding on the vehicle according to a signal strength value and time stamp information of the first sequence fragment.

### Patent Literature

PTL 1: WO 2018/215958 A1
PTL 2: US 2020/279203 A1

According to an aspect, the invention may include a data storage unit, which can store information storable in a beacon definition table, a beacon signal management table and/or a passenger status definition table. The data storage unit may preferably be an internal storage unit for storing, among others, the information described below in a database which is preferably structured as a table, another suitable data format or the like. The data storage may be provided with the user's mobile device, the apparatus or another remote location. The data storage may also be distributed over different storage places.

The beacon definition table may preferably be configured to store a beacon ID, a position ID indicating the location of a beacon and an attribute indicating whether a beacon is installed on a moving object or a stationary object. The attribute may preferably be a quality corresponding to the beacon ID facilitating discrimination of signals being received from a beacon installed on a stationary object or a beacon installed on a moving object. The attribute may be a text or character (string) indicating whether the signal was issued from a moving object beacon or a stationary object beacon.

The beacon signal managementtable may preferably be configured to store the beacon ID of each beacon signal received from the mobile device and a time stamp indicating the time of receipt of a beacon signal.

The passenger status definition table may preferably be configured to store information about a previous or current passenger status and a beacon signal strength.

The term passenger status may be understood as the status of a passenger using a facility of public transportation such as a train station or bus station and its corresponding means of transportation such as train or bus. This may include activities such as waiting for a means of transportation at a respective station, being onboard a means transportation or entering a station, being outside a station or the like.

The term beacon signal strength may be understood as a value representable by a discrete number which preferably may be attained according to the following explanation.

Further, the apparatus may include a beacon ID translation module configured to read the position ID and the attribute of the received beacon signal from the beacon definition table and to write the beacon ID and the time stamp into the beacon signal management table.

The writing of the beacon ID into the signal management table may preferably be performed such that the received beacon IDs are written into a column of the signal management table according to the attribute corresponding to the beacon IDs.

In other words, the beacon IDs may be stored in the signal management table differently or at different parts of the database depending on whether they originated from a mobile or a stationary object/beacon. In even other words, if the beacon ID is stored in such a preferable manner, a beacon ID received from a beacon installed on a stationary object or a beacon installed on a moving object, respectively, is stored differently in the signal management table. Such a "pre-sorted storing" of beacon IDs in the signal management table is optional, however, it improves the responsiveness and data return rate/time, if the information is to be read from the beacon signal management table. If the "table" is not a table, other ways of pre-sorting may be applied as well so that IDs may be stored at predefined "places" or tagged so that they can be quickly distinguished/processed in regard of the corresponding attributes.

The apparatus may further comprise a beacon signal recognition module configured to determine a moving object beacon signal strength of beacon signal received from beacons installed on a moving object and a stationary object beacon signal strength of beacon signals received from beacons installed on a stationary object, wherein the beacon signal strength is preferably the sum of the number of beacon IDs stored in the beacon signal management table, preferably at a specific time or during a specific time period.

In other words, the apparatus may determine a beacon signal strength for beacon signals received from beacons installed on a stationary object and beacons installed on a moving object. The beacon signal strength may be defined as a discrete number representing the sum of the number of beacon IDs received from each beacon.

The apparatus may further comprise a passenger status presumption module configured to determine a passenger current status based on the moving object beacon signal strength, the stationary object beacon strength and/or a previous passenger status.

The above described apparatus is enabled to determine a passenger status reliably. The passenger status may be e.g. a status that a passenger is, while waiting for a train, inside a train station. Technically beneficially, especially in view of reliability and a low computational effort, the apparatus may calculate the sum of the number of beacon IDs, which can be performed without large computational costs, received form beacons installed on a stationary object and/or beacons installed on a moving object in order to determine a beacon signal strength and subsequently determine a status of a passenger using facilities of public transport based on the beacon signal strength and/or a previous passenger status. In other words, a passenger's status, and thereby also the location, can be incessantly determined over an entire journey of the passenger based on a relatively simple hardware architecture and computationally less complex operations which only requires beacons and a user mobile device. Further, only few parameters are needed for determining the status reliably so that amount of data being transferred, stored and/or processed is relatively low which also adds to the reduction of computational processing efforts.

Also, there is no need for additional infrastructure such as a satellite-based navigation system or the like as the apparatus can be operated as a quasi-standalone system relying on beacon signal strengths and passenger status information. However, providing high flexibility, a satellite-based navigation system can be added to the system if desired.

Further, preferably, the passenger status presumption module may be configured to determine the passenger's current status based on the moving object beacon signal strength, the stationary object beacon signal strength, a change over time of the moving object beacon signal strength, the change over time of the stationary object beacon strength and/or the previous passenger status.

The term "change over time" of the beacon signal strength may be understood as the change over time of the sum of the number of beacon IDs received from a beacon either installed on a stationary object or a beacon installed on a moving object. In other words, an increase or decrease in the beacon signal strength for the respective beacons can be used to determine a passenger status. The sum of the number of beacon IDs received from moving or stationary beacons is associated with an increasing or decreasing number of receptions of mobile or stationary beacon signals, respectively. Accordingly, the value representing the beacon signal strength may be an absolute value which increases with the number of beacon IDs received from moving or stationary beacons (during a specific time period of observation/sum building).

Especially in view of increasing the reliability of passenger status determination, the above described determination based on a change over time of the moving object beacon signal strength and the stationary object beacon signal strength is technically advantageous since incorrect determinations of the passenger status can be avoided better. The parameters which are used for the determination can be determined/calculated without high efforts and at the same time they provide a reliable "picture" about the status to the determined. The status presumption module is enabled to precisely determine the status of a passenger by using dynamic changes of relative positioning. Accordingly, if the determined beacon signal strength changes, it can be assumed that the current passenger status changes due to a change of relative distance between a passenger and an object on which a beacon is installed. This is especially technically beneficial for the reliable determination of a passenger status in dynamically changing scenarios involving moving objects such as a passenger, a train or a bus and stationary objects such as a bus station or a train station. In this respect, the use of beacons provides a reliable way of tracking the movement of said objects in a temporary and spatially highly resolved way.

Further, preferably, the passenger status presumption module may be configured to determine the current passenger status by selecting a passenger status from a plurality of predefined passenger status stored in in the passenger status definition table.

In other words, the passenger status definition table may include a plurality of pre-set/ predefined status which can be directly selected by the status presumption module. This helps to reduce computational effort during the determination of a passenger status because a predefined status can be selected without additional complex computational operations. Also, the responsiveness and data return rate/time during determination of a passenger status is improved by selecting a predefined passenger status directly from the passenger status definition table. Most preferably, the table includes a set of predefined combinations for different parameters and the respective status to be output. Otherwise, it may be also implemented that the parameter combinations are processed by a machine-learning algorithm or the like which is learned and learns to output a status based on parameter combinations.

Further, preferably, the plurality of predefined passenger status may be defined in in the passenger status definition table wherein each passenger status may be based on a combination of at least one of an absolute value of the moving object beacon signal strength, an absolute value of the stationary object beacon strength, a change over time of the moving object beacon signal strength, the stationary object beacon strength and/or the previous passenger status. The change over time of the signal strength may particularly be monitored in view of the direction of the change, i.e. does the signal strength increase or decrease.

The above synergistically adds to the improved reliability/reduced computational effort of the apparatus by using a plurality of predefined passenger status of which a particular passenger status relates to at least one combination of a beacon signal strength, a change over time of a beacon signal strength and/or a previous passenger status. In other words, the determination of a passenger status can be facilitated by referring to pre-set scenarios corresponding to the above information regarding a beacon signal strength and a previous passenger status. This is especially beneficial for the selection of a current passenger status since, for example, the possible candidates for determination of a current passenger status can be narrowed down accordingly by selecting only from a set of predefined passenger status that relate to the above described combinations.

According to the above, the determination of a current passenger status can be carried out with reduced computational effort because previously determined passenger status can be used to narrow down the number of possible predefined passenger status to be selected by the passenger status presumption module. This also reduces the risk of incorrect determinations of a current passenger status and therefore increases the reliability of the apparatus.

Further, preferably, the plurality of predefined passenger status stored in the passenger status definition table may include predefined passenger status such as "outside", "waiting", ready to board" and "onboard", wherein the term "outside" may describe a status in which a passenger is outside of stations or vehicles of public transportation system, the term "waiting" may describe a status in which a passenger is waiting for a vehicle of public transport at a station, the term "ready to board" may describe a status in a passenger is ready to board at a station and term "on board" may describe a status in which a passenger is on board a vehicle of public transport. Further status may be defined.

Further, preferably, the beacon signal recognition module may be configured to determine the moving object beacon signal strength by counting the number of beacon IDs of beacon signals received from moving objects stored in the beacon signal management table and the stationary object beacon signal strength by counting the number of beacon IDs of beacon signals received from stationary objects stored in the beacon signal management table.

In other words, the apparatus may count every beacon ID received from a beacon installed on a stationary object or moving object that was written into the beacon signal management table and determine its beacon signal strength by (incessantly) forming the sum of the number of every beacon signal received.

This is especially technically beneficial for a reliable determination of a passenger status based on the beacon signal strength because the beacon signal strength can be determined after the expiry of any given interval. This enables for an incessant and more flexible determination of the beacon signal strength of beacons installed on stationary objects or moving objects which is less susceptible to errors in signal reception and therefore helps in increasing the reliability of the apparatus.

Further, preferably, the beacon signal management table may be configured to store each beacon ID such as to differentiate between beacon IDs form a stationary object and a moving object, respectively.

In other words, the beacon signal recognition module may store received beacon IDs in the beacon signal management table in a predetermined position such as a column of the table according to the attribute corresponding to the beacon ID. This means that the beacon signal management table has a plurality of predetermined storage positions in which a plurality of beacon IDs can be stored according to their corresponding attribute. This allows to differentiate beacon IDs received from beacons installed on stationary objects and beacon IDs received from beacons installed on moving objects. For example, a beacon ID received from a beacon installed on a stationary object may be stored in a first column of the beacon management table whereas a beacon ID received from a beacon installed on a moving object may be stored in the second column of the beacon management table.

This synergistically adds to the improved reliability of the apparatus by offering the advantage of easy to facilitate discrimination of IDs received from beacons installed on a stationary object or beacons installed on a moving object. This also helps to reduce computational effort during the determination of the beacon signal strength of the respective beacons since the information relating to the type of received beacon is already integrated in the beacon signal management table.

Further, preferably, the beacon ID translation module may be configured to periodically sample received beacon signals and to write the beacon ID and the time stamp of receipt into the beacon signal management table at first predetermined time intervals.

The expression periodically sample shall mean that the beacon ID translation module may check in recurring time intervals if a beacon signal including a beacon ID is received from stationary beacon or a moving beacon. The term first predetermined time interval shall be understood as the time interval which lies between two sampling processes of a beacon signal and respectively the corresponding process of storing a received beacon ID in the beacon signal management table. The first predetermined time interval may preferably be a time period ranging from 1 second to 10 seconds. However, it may also be longer or shorter.

This is especially beneficial in reducing the computational effort for the determination of a passenger status keeping storage usage and processor load low. Also, the reliability of the apparatus can be increased by sampling received beacon signals according to a predetermined interval in order to efficiently track a change over time of the beacon signal strength.

Alternatively, the beacon ID translation module may be configured to continuously update the beacon signal management table every time a beacon ID is received and to store the received beacon ID together with a time stamp in the beacon signal management table.

Further, preferably, the beacon signal recognition module may be configured to determine the beacon signal strength after the expiry of a second predetermined time interval which is equal to or larger than the first predetermined time interval.

The term second predetermined time interval is to be understood as the time interval which lies between two determination processes of the beacon signal strength conducted by the beacon signal recognition module. The second predetermined time interval may preferably be a time period ranging in the order of some seconds to few minutes even though it may also be longer.

The above synergistically adds to the improved reliability of the apparatus in that determination of the beacon signal strengths after a predetermined reproducible interval enables a reliable determination of the passenger status according to application-specific intervals. This also helps to reduce computational effort by keeping storage usage and processor load low.

Further, preferably, the beacon signal recognition module may be configured to reset the beacon signal management table after the expiry of the second predetermined time interval.

In other words, reset of the beacon signal management table may be conducted after the sum of the number of detected beacon IDs was used to determine the beacon signal strength of beacons installed on a stationary object and beacons installed on a moving object according to the second predetermined time interval.

Also, preferably, the beacon signal strength may additionally be determined before the second predetermined time interval has expired in order to determine the change over time of the beacon signal strength within the second predetermined time interval according to a pre-interval. Thus, the attained intermediate values of the beacon signal strength help in increasing the resolution of determining the change in time of the beacon signal strength.

The above synergistically adds to the improved reliability of the apparatus by securing that sampling of the received beacon signals is always conducted for an equal number of first predetermined time intervals. This leads to a reproducible and more reliable determination of the beacon signal strength. Furthermore, computational effort can be reduced because by resetting the beacon signal management table helps to keep storage usage low.

Further, preferably, the beacon signal recognition module may be configured to reset the beacon signal management table by overwriting the beacon IDs and time stamps previously stored in the beacon signal management table.

In other words, reset of the beacon signal management table may be conducted by overwriting beacon IDs and time stamps stored in the beacon signal management table according to a "first in - first out" policy. This helps to reduce storage usage and reduces computational effort by storing new information in a storage system with reduced complexity. In an aspect of the invention, the overwriting of the beacon IDs stored in the beacon management table may be conducted after the second predetermined time interval has expired.

Further, preferably, the beacon signal strength may be represented by discrete values ranging from a minimum of the value of zero to a maximum value which corresponds to the number of first predetermined time intervals within the second predetermined time interval.

In other words, the maximum value of the beacon signal strength and accordingly the maximum number of successful ID samplings may correspond to the number of first predetermined intervals included in the second predetermined time interval ranging to a minimum value of zero for no successful samplings during the second predetermined time interval.

Further, preferably, the beacon recognition module may be configured to store the beacon ID of each beacon signal received from the mobile device in a predetermined storage location of the signal management table according to the attribute corresponding to the beacon ID.

Further, preferably, the passenger status presumption module may be configured to store a start time as a first time when the passenger status presumption module determines a passenger's current status for the first time and an end time as a time when the passenger status presumption module determines a passenger's current status for the last time during passenger journey in a passenger status history table comprised in the data storage unit.

Further, preferably, the apparatus may further comprise a journey confirmation module configured to store a travel start station as allocation where a passenger starts a journey and a travel end station as a location where a passenger ends a journey in a journey history table comprised in the data storage unit. This allows providing the user/passenger with journey data, for example, which supports the user to travel from one location to another smoothly.

Further, there is claimed a system comprising a server, a passenger mobile device comprising a beacon signal detector, at least one beacon installed on a stationary object configured to send a beacon signal comprising a beacon ID and/or at least one beacon installed on a moving object configured to send a beacon signal comprising a beacon ID. The system brings the technical advantages as discussed above, especially in view of a less complex architecture which allows to reliable detect the status of the passenger/user of the mobile device within the transportation system without requiring a high computational burden.

Further there is claimed a method for determining a passenger status. The method may include the steps: receiving, from a mobile device, a beacon signal including a beacon ID which the mobile device received from a beacon, reading a position ID and an attribute corresponding to the beacon ID indicating whether a beacon is installed on a moving object or a stationary object from a storage unit, determining a beacon signal strength by building a sum of the received beacon IDs from the beacons which are installed on a moving object or a stationary object, storing the beacon signal strength for each beacon signal received from a beacon installed on a moving object or a stationary object in the storage unit, determining a passenger's current status based on the beacon signal strength and/or a previous passenger status.

In other words, each configuration of the claimed apparatus shall also be encompassed by way of a method, which may be claimed by itself and/or by way of a computer program product claim.

Summarizing, a solution is provided which offers technical benefits especially with regard to reliability, reduced computational effort and decreased data transfer/data processing in the determination of a passenger status.

In the following the claimed subject matter will be further explained based on at least one preferential example with reference to the attached drawings, wherein:
- Figure 1: shows a schematic overview of an example of an apparatus for determination of a passenger status.
- Figure 2: shows a schematic example of determining a passenger status by using beacon signals including a beacon ID.
- Figure 3: shows an example of a beacon definition table.
- Figure 4: shows an example shows an example of a beacon signal management table.
- Figure 5: shows an example of a passenger status definition table.
- Figure 6: shows an example of a passenger status history table.
- Figure 7: shows an example of a journey history table.
- Figure 8: shows an example of a transportation fare table.

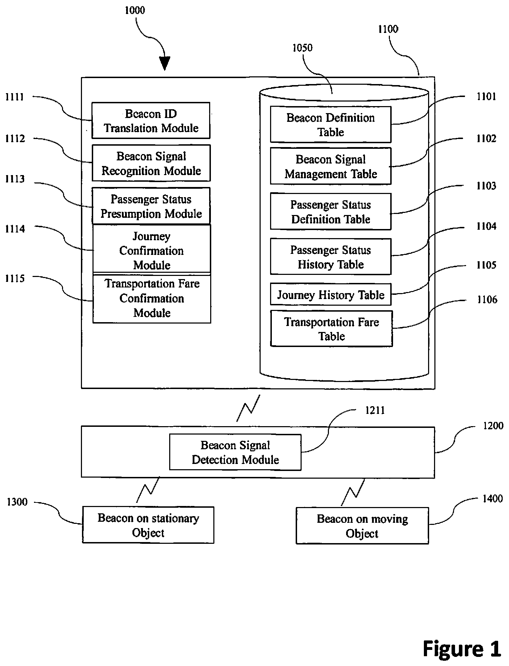

Figure 1 shows a schematic overview of an exemplary apparatus as described in this application. Figure 1 shows that the apparatus 1000 may comprise a server 1100 configured to receive a beacon signal including a beacon ID from a mobile device 1200 of a passenger which the mobile device 1200 received from a plurality of beacons comprising beacons installed on stationary objects 1300 and beacons installed on moving objects 1400. The mobile device 1200 preferably is a smartphone, a tablet, a smart watch, a laptop or any other computing device. The one or more beacons installed on a stationary object 1300 and the one or more beacons installed on a moving object 1400 send beacon signals including a beacon ID which are detectable by a beacon signal detection module 1211 comprised in the mobile device 1200 of a passenger when the mobile device 1200 of a passenger is within a range of the beacon signal. This is indicated by the zigzag line between the exemplary beacon installed on a stationary object 1300 and the zigzag line between the exemplary beacon installed on a moving object 1400, respectively.

The beacons may be a device that continuously or repeatedly emits mid-range to short-range radio signals that can communicate information wirelessly to other devices. The radio signals emitted by the wireless beacon can be part of any appropriate standard for mid-range to short-range radio communications having an operable range of at least one meter and up to about 50 meters, e.g., Bluetooth, Bluetooth 4.0, and Bluetooth Low Energy (BLE), or the like. The radio signals described in this specification can be any appropriate type of signal, e.g., a broadcast signal that indicates presence of the device to nearby devices, a pairing signal that requests automatic pairing with a nearby device, or a connection signal that transmits data to a connected nearby device, and the like.

The mobile device 1200 of a passenger sends the received beacon signals including the beacon ID to the server 1100. This is indicated by the zigzag line between the mobile device 1200 and the server 1100. The server 1100 may comprise a storage unit 1150 including a beacon definition table 1101, a beacon signal management table 1102, a passenger status definition table 1103, a passenger status history table 1104, a journey history table 1105, and/or a transportation fare table 1106. Furthermore, the server 1100 may comprise a beacon ID translation module 1111, a beacon signal recognition module 1112, a passenger status presumption module 1113. Optionally, as depicted, the server 1100 may further comprise a journey confirmation module 1114 and/or a transportation fare confirmation module 1115.

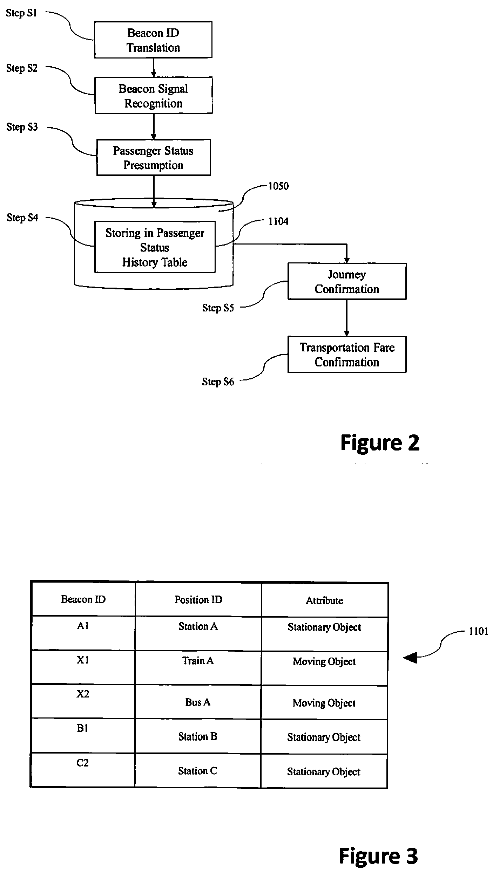

Figure 2 shows a schematic example of determining a passenger status by using beacon signals including a beacon ID. In a first step S1 the beacon ID translation module 1111 receives a beacon ID send by the mobile device 1200 of a passenger which the mobile device 1200 received from a beacon emitting a beacon signal before. The beacon ID translation module 1111 determines a position ID and an attribute indicating whether a beacon ID was received from a beacon installed on a stationary object or a beacon installed on a moving object corresponding to the received position ID. This may be performed by a look-up operation, e.g., wherein a table such as shown in Figure 3 is used.

The received beacon ID and the determined attribute are then stored together with a time stamp corresponding with the time of reception of the beacon ID in the beacon signal management table 1102 by the beacon ID translation module 1111. In a next step S2, the beacon signal recognition module 1112 determines a signal strength of the received beacon signal based on the sum of the number of the received beacon IDs and the attribute. The determined beacon signal strengths of beacon signals received from beacons installed on a stationary object and beacon signals received from beacons installed on a moving object are then stored in the passenger status definition table 1103. In a following step S3, the passenger status presumption module 1113 determines a passenger current status based on the moving object beacon signal strength, the stationary object beacon signal strength and/or a previous passenger status. The determined current passenger status, which has been determined based on the moving object beacon signal strength, the stationary object beacon signal strength and/or a previous passenger status is then stored in the passenger status definition table 1113.

Subsequently in step S4, the determined passenger current status is also stored in a passenger status history table 1104 where it is added to a succession of passenger status assumed by the passenger during a journey. In a next step S5, the journey confirmation module 1114 may determine a journey of a passenger according to the succession of previously determined passenger current status. Further, in an optional step S6 the transportation fare confirmation module 1115 may determine a fare to be charged for the determined journey.

Figure 3 shows an example of a beacon definition table 1101 which may be stored in the apparatus 1100, the mobile device 1200 and/or in any other suitable location. For each beacon ID stored in the beacon definition table 1101 there is also stored a position ID and an attribute corresponding to the beacon ID. The position ID comprises information on the position where a beacon is installed. For example, a beacon with the beacon ID A1 is installed in Station A which may be a train station or a bus station frequented by means of public transport such as a train or a bus. As a second example, the beacon with the beacon ID X1 is installed on a Train A which may be part of a system for public transport. The attribute indicates whether a beacon is installed on a moving object or a stationary object. According to the present examples, Station A has the attribute Stationary object and Train A has the attribute moving object. In other words, the beacon definition table 1101 allows connecting the beacon ID comprised in the beacon signal received from a beacon to a position (the place at which the beacon is installed) and the attribute (whether the beacon is installed on a moving or stationary object). This allows that the beacon signal itself does not need to carry a lot of information and the data size can be small, however, the position of the passenger and the attribute of the beacon can be reliably determined. The table can be updated centrally so that new/amended information can be provided without simply and without complexity.

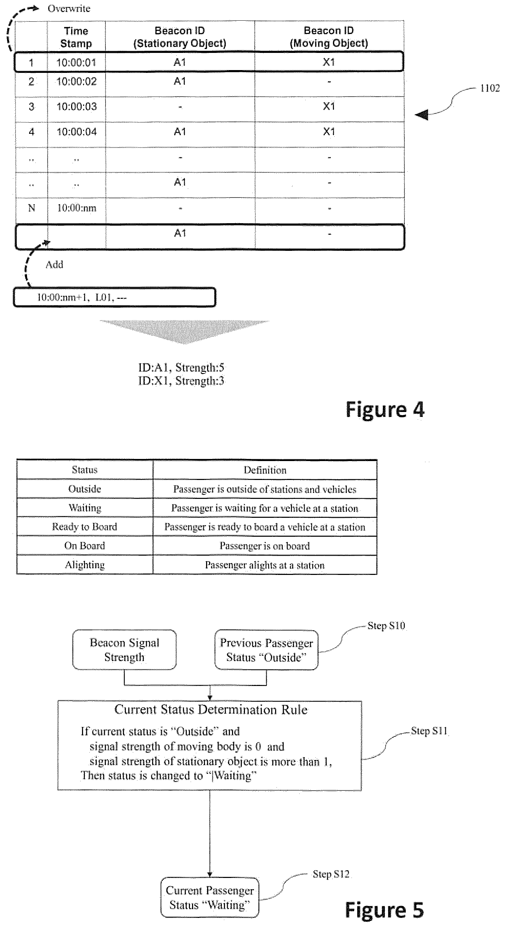

Figure 4 shows an example of a beacon signal management table 1102. In this example, the time stamps created according to a predetermined time interval may be stored in the first vertical column of the beacon signal management table 1102. However, the format is just one possible example and the "table" may be arranged, structured differently. For each of the stored time stamps beacon IDs received from the mobile device 1200 of a passenger are stored in predetermined positions of the beacon signal management table 1102. For example, as shown in Figure 4, the predetermined positions for storing the received beacon IDs may be the vertical columns of the beacon signal management table 1102. In this exemplary case, the columns in which the received beacon IDs are stored are determined by the attribute corresponding to the beacon ID. Accordingly, a beacon ID received from a stationary object may be stored in the first vertical column of the beacon signal management table 1102 whereas a beacon ID received from a moving object may be stored in the second vertical column of the beacon signal management table 1102.

In this example, the time stamps are created according to a first predetermined time interval of one second. After the second predetermined time interval which may be 10 seconds has expired, a time stamp created first may be overwritten by a time stamp created second when a new latest time stamp is created after the expiry of the second predetermined time interval. This way, the beacon signal management table 1102 is recurrently overwritten according to the second predetermined time interval following a first in - first out policy. This reduces inter alia data storage space. Also, the beacon signal recognition module 1112 may alternatively be configured to restart storing beacon IDs and the according time stamps in the beacon signal management table 1102 when the content of the beacon signal management table 1102 was completely reset after the expiry of the second predetermined time interval.

After the second predetermined time interval has expired, the beacon signal strength for each beacon ID stored in the beacon signal management table 1102 is determined by the beacon signal recognition module 1112 by building the sum of the number of beacon IDs stored in the beacon signal management table 1102. In the example shown by Figure 4, the beacon signal strength of the beacon with the beacon ID A1 has been determined to have the absolute value 5 as A1 was received five times during the depicted process of beacon signal sampling. Accordingly, the beacon signal strength of the beacon with the beacon ID X1 was determined to have the absolute value 3 as X1 was received three times during the depicted process of beacon signal sampling. Alternatively, the beacon signal recognition module 1112 may also determine the beacon signal strength by determining a moving average value stemming from a process of continuous sampling. The strength values may be stored in another table (not shown) for tracking the temporal change of the values.

Figure 5 shows an example of the passenger status determination performed by the passenger status presumption module 1113. According to the example shown, the passenger status determination is performed based on a scenario table.

The beacon signal window for the determination of the beacon signal strength of beacons installed on a stationary object and beacons installed on a moving object may be the second predetermined time interval in this example. Accordingly, the possible values of the respective beacon signal strengths range from a minimum value of zero to maximum value which corresponds to the number of first predetermined time intervals within the second predetermined time interval. The predefined passenger status include but are not limited to "outside", "waiting", "ready to board", "onboard" and/or "alighting" wherein the term "outside" describes a status in which a passenger is outside of stations and vehicles of public transport, the term "waiting" describes a status in which a passenger is waiting for a vehicle of public transport at a station, the term "ready to board" describes a status in a passenger is ready to board at a station, the term "on board" describes a status in which a passenger is on board a vehicle of public transport and the term "alighting" describes a status in which a passenger alights at a station.

In the passenger status definition table 1103 the current passenger determined by the passenger status presumption module 1113 is stored at the point of intersection of a predefined passenger status and the results of the determination of mobile and stationary beacon signal strengths carried out by the beacon signal recognition module 1112. In this example the predefined passenger status are previous passenger status which have been determined in a previous process of passenger status determination. If no previous determination of a current passenger status has been carried out by the apparatus, a previous passenger status may be assumed to be "outside". Furthermore, in this example, the results of the determination of the beacon signal strengths may be categorized into a set of predetermined possible results. The possible results may include a combination of beacon signal strengths of mobile beacons and stationary beacons represented by values such as zero, 1 to max and half to max. As described above, max represents a maximum value corresponding to the number of first predetermined time intervals within the second predetermined time interval and zero represents a minimum value of zero.

The determination of the current passenger status is explained using an exemplary case shown in Figure 5. In this case the previous passenger status has been determined to be "outside" in the previous determination of the current passenger status and the combination of beacon signal strengths of mobile beacons and stationary beacons has been determined by the beacon signal recognition module 1112 after the expiry of the second predetermined time interval. In particular, the signal strength of a beacon installed on a moving object has been determined to be zero and the signal strength of a beacon installed on a stationary object has been determined to be more than 1.

For a previous passenger status was determined to be "outside" the condition has to apply that the mobile device 1200 of the passenger did not receive beacon signals. Correspondingly, the signal strength of beacons installed on a stationary object and the beacon signal strength of beacons installed on a moving object must have been determined to be zero in a previous determination of a passenger status. In order to determine the current passenger status following the previously determined passenger status, the beacon signal strengths of the respective beacons have to be determined again by the beacon signal recognition module 1112 as shown in Figure 4. After that, the passenger status presumption module 1113 determines the current passenger status by selecting a passenger status from the plurality of predefined passenger status stored in the passenger status definition table 1103 according to the result of the determination of beacon signal strengths.

In this example, the current passenger status has been determined by the passenger status presumption module 1113 to be "waiting". This result is based on the previous passenger status which was determined to be "outside" and the change over time of the beacon signal strengths of both, mobile beacons and stationary beacons acquired in step S10 of the passenger status determination. As the beacon signal strength for both beacon types changes from zero to zero for moving beacons and 1 to max for stationary beacons the passenger status presumption module 1113 determines in step S11 of the passenger status determination that the conditions for a scenario in which a passenger has entered the signal range of at least one beacon installed on a stationary object such as a bus station or a train station are fulfilled. In other words, the current status of the passenger is determined to be "waiting" by the status presumption module 1113 in a step of S12 of the passenger status determination as the increase over time of the beacon signal strength received from a beacon installed on a stationary object means that the passenger has entered a station coming from the outside in order to wait for a means of public transport.

According to the change over time of the beacon signal strengths determined by the beacon signal recognition module 1112 a plurality of current passenger status can be determined depending on the previous passenger status.

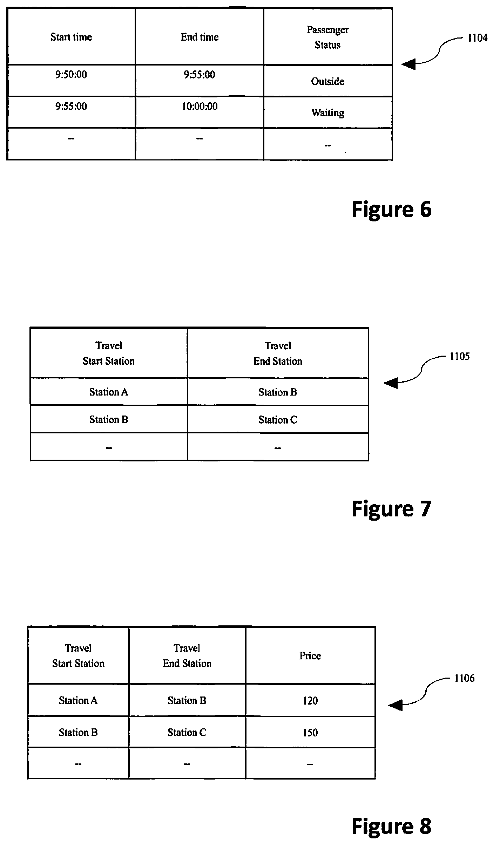

Figure 6 shows an example of a passenger status history table 1104. For each passenger status determined by the passenger status presumption module 1113 there is also stored a start time and an end time. The start time is the first time when the passenger status presumption module 1113 determines a passenger current status for the first time and the end time is a time when the passenger status presumption module 1113 determines a passenger current status for the last time during a passenger journey. By storing a start time and an end time for each status determined as a current passenger status by the passenger status presumption module 1113, a journey of a passenger can be efficiently tracked and the respective information can be provided to the passenger for supporting/guiding the passenger during his journey. Accordingly, the apparatus 1000 offers the possibility of continuously recording a passenger status during a passenger journey. Therefore, the status of a passenger can be reproduced for every point in time of a user journey. Moreover, due to the beacon IDs received during a passenger journey the apparatus 1000 can determine where the passenger assumed the recorded status during a passenger journey. Information about a passenger location associated with the received passenger IDs of moving or stationary beacons can be used in the compilation of the contents of the journey history table which is described below.

Figure 7 shows an example of a journey history table 1105. The journey history table 1105 stores a travel start station and a travel end station for a user journey. The travel start station is the station of public transport, such as a bus station or a train station, where a passenger started a passenger journey and correspondingly the travel end station is the station of public transport where a passenger ended a passenger journey. The journey confirmation module 1114 stores the travel start station and the travel end station for each passenger journey in the journey history table. By storing a travel start station and a travel end station, a total distance which a passenger travelled during a passenger journey can be determined. This can be used in an optional subsequent step of transportation fare determination.

Figure 8 shows an example of a transportation fare table 1106. The transportation fare table stores a travel start station of a passenger journey, a travel end station of a passenger journey and a corresponding fare that has to be paid by the passenger for the use of means of public transport in order to get from the travel start station to the travel end station. According to the distance between the travel start station and the travel end station the transportation fare confirmation module 1115 may determine a transportation fare for each passenger journey and store it in the transportation fare table 1106. In the shown example, the transportation fare may for a passenger journey from Station A to Station B may be 120 units or subunits of any national currency.

Summarizing, the present disclosure provides a reliable apparatus 1000 as well as a system, a method and a computer program product for determining a passenger status. Accordingly, the determination of a passenger status is performed by receiving a beacon signal including a beacon ID from beacons installed on a stationary object and beacons installed on a moving object, storing the received beacon IDs along with a corresponding attribute and a time stamp in a beacon signal management table, determining a moving object beacon signal strength of beacon signals received from beacons installed on a moving object and a stationary object beacon signal strength of beacon signals received from beacons installed on a stationary object by building a sum of the number of beacon IDs received from moving objects and stationary objects stored in the beacon signal management table and determining a passenger current status based on the moving object beacon signal strength, the stationary object beacon signal strength and/or a previous passenger status.

This offers the advantage, inter alia, of an especially reliable determination of a passenger status because, for example, among other benefits the use of beacons in order to determine a passenger status provides an architecture which is independent of external systems for positioning making it less susceptible for external detection errors. Moreover, the described incessant sampling of beacon signals leads to a more efficient and reliable tracking of a passenger status based on a combination of different types of beacon signals. In addition to that, the described storing of beacon signal IDs and predetermined passenger status enables the provision of a less complex data storage structure and reduced storage usage. Also, the storing of predefined passenger status in the passenger status definition table leads to reduced computational effort in the passenger status determination due to a pre-selection of possible current passenger status according to the previously described scenarios.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, in view of this disclosure, that different embodiments or aspects described herein may be combined to form other embodiments.

## Claims

1. An apparatus (1000) for determination of a passenger status, which is configured to receive a beacon signal including a beacon ID from a mobile device (1200) of the passenger which the mobile device (1200) received from a beacon, comprising:
a data storage unit (1150) configured to store information in a beacon definition table (1101), a beacon signal management table (1102) and a passenger status definition table (1103),
wherein the beacon definition table (1101) is configured to store a beacon ID, a position ID indicating the location of a beacon and an attribute indicating whether a beacon is installed on a moving object or a stationary object, and
the beacon signal management table (1102) is configured to store the beacon ID of each beacon signal received from the mobile device and a time stamp, and
the passenger status definition table (1103) is configured to store information about a previous or current passenger status and a beacon signal strength;
wherein the apparatus (1100) further comprises:
a beacon ID translation module (1111) configured to read the position ID and the attribute of the received beacon signal from the beacon definition table (1101) and to write the beacon ID and the time stamp of receipt of the beacon signal into the beacon signal management table (1102);
a beacon signal recognition module (1112) configured to determine a moving object beacon signal strength of beacon signals received from beacons installed on a moving object and a stationary object beacon signal strength of beacon signals received from beacons installed on a stationary object, wherein the beacon signal strength is a sum of a number of beacon IDs stored in the beacon signal management table (1102), wherein the beacon signal recognition module (1112) is configured to determine the moving object beacon signal strength by counting the number of beacon IDs of beacon signals received from moving objects stored in the beacon signal management table (1102) and the stationary object beacon signal strength by counting the number of beacon IDs of beacon signals received from stationary objects stored in the beacon signal management table (1102);
a passenger status presumption module (1113) configured to determine a passenger current status based on the moving object beacon signal strength, the stationary object beacon signal strength and/or a previous passenger status.

2. The apparatus according to claim 1,
wherein the passenger status presumption module (1113) is configured to determine the passenger's current status based on the moving object beacon signal strength, the stationary object beacon signal strength, a change over time of the moving object beacon signal strength, the stationary object beacon strength and/or the previous passenger status.

3. The apparatus according to at least one of the previous claims,
wherein the passenger status presumption module (1113) is configured to determine the current passenger status by selecting a passenger status from a plurality of predefined passenger status stored in the passenger status definition table (1103).

4. The apparatus according to claim 3,
wherein the plurality of predefined passenger status are defined in the passenger status definition table (1103) each based on a combination of at least one of an absolute value of the moving object beacon signal strength, an absolute value of the stationary object beacon strength, a change over time of the moving object beacon signal strength, the stationary object beacon strength and/or the previous passenger status.

5. The apparatus according to claim 3 or 4,
wherein the plurality of predefined passenger status stored in the passenger status definition table (1103) includes "outside", "waiting", "ready to board" and "onboard".

6. The apparatus according to at least one of the previous claims,
wherein the beacon signal management table (1102) stores each beacon ID such as to differentiate between beacon IDs from a stationary object and a moving object, respectively.

7. The apparatus according to at least one of the previous claims,
wherein the beacon ID translation module (1111) is configured to periodically sample received beacon signals and to write the beacon ID and the time stamp of receipt into the beacon signal management table (1102) at first predetermined time intervals.

8. The apparatus according to at least one of the previous claims,
wherein the beacon signal recognition module (1112) is configured to determine the beacon signal strength after the expiry of a second predetermined time interval which is equal to or longer than the first predetermined time interval.

9. The apparatus according to at least one of the previous claims,
wherein the beacon signal recognition module (1112) is configured to reset the beacon signal management table (1102) after the expiry of a second predetermined time interval.

10. The apparatus according to at least one of the previous claims,
wherein the beacon signal recognition module (1112) is configured to reset the beacon signal management table (1102) by overwriting the beacon IDs and time stamps previously stored in the beacon signal management table (1102).

11. The apparatus according to at least one of the previous claims,
wherein the beacon signal strength is represented by discrete values ranging from a minimum of the value of zero to a maximum value which corresponds to the number of first predetermined time intervals within the second predetermined time interval.

12. The apparatus according to claim 6,
wherein the beacon signal recognition module (1112) is configured to store the beacon ID of each beacon signal received from the mobile device in a predetermined storage location of the signal management table (1102) according to the attribute corresponding to the beacon ID.

13. The apparatus according to at least any one of the previous claims,
wherein the passenger status presumption module (1113) is further configured to store a start time as a first time when the passenger status presumption module (1113) determines a passenger's current status for the first time and an end time as a time when the passenger status presumption module (1113) determines a passenger's current status for the last time during a passenger journey in a passenger status history table comprised in the data storage unit (1150).

14. The apparatus according to at least any one of the previous claims further comprising
a journey confirmation module (1114) configured to store a travel start station as a location where a passenger starts a journey and a travel end station as a location where a passenger ends a journey in a journey history table (1105) comprised in the data storage unit (1150).

15. A system which includes the apparatus (1000) according to at least one of claims 1 to 14, a passenger mobile device (1200) comprising a beacon signal detector (1211), a beacon installed on a stationary object (1300) configured to send a beacon signal comprising a beacon ID and a beacon installed on a moving object (1400) configured to send a beacon signal comprising a beacon ID.

16. A method for determining a passenger status comprising:
receiving, from a mobile device, a beacon signal including a beacon ID which the mobile device received from a beacon;
reading a position ID and an attribute corresponding to the beacon ID indicating whether a beacon is installed on a moving object or a stationary object from a storage unit;
determining a beacon signal strength by building a sum of a number of the received beacon IDs from the beacons which are installed on a moving object or a stationary object during a predefined time interval, wherein a moving object beacon signal strength is determined by counting a number of beacon IDs of beacon signals received from moving objects during the predefined time interval and a stationary object beacon signal strength is determined by counting a number of beacon IDs of beacon signals received from stationary objects during the predefined time interval
storing the beacon signal strength for each beacon signal received from a beacon installed on a moving object or a stationary object during the predefined time interval in the storage unit;
determining a passenger's current status based on the beacon signal strength and/or a previous passenger status.

17. A computer program product storable in a memory comprising instructions which, when carried out by a computer, causes the computer to perform the method according to claim 16.

## Patentansprüche

1. Vorrichtung (1000) zum Bestimmen einer Passagierzustands, die konfiguriert ist, ein Bakensignal, das eine Baken-ID enthält, von einem Mobilgerät (1200) des Passagiers zu empfangen, das das Mobilgerät (1200) von einer Bake empfangen hat, die Folgendes umfasst:
eine Datenspeichereinheit (1150), die konfiguriert ist, Informationen in einer Bakendefinitionstabelle (1101), einer Bakensignal-Managementtabelle (1102) und einer Passagierzustands-Definitionstabelle (1103) zu speichern,
wobei die Bakendefinitionstabelle (1101) konfiguriert ist, eine Baken-ID, eine Positions-ID, die den Ort einer Bake angibt, und ein Attribut, das angibt, ob eine Bake auf einem sich bewegenden Gegenstand oder einem ortsfesten Gegenstand installiert ist, zu speichern, und
die Bakensignal-Managementtabelle (1102) konfiguriert ist, die Baken-ID jedes Bakensignals, das von dem Mobilgerät empfangen wird, und einen Zeitstempel zu speichern, und
die Passagierzustands-Definitionstabelle (1103) konfiguriert ist, Informationen über einen vorhergehenden oder aktuellen Passagierzustand und eine Bakensignalstärke zu speichern;
wobei die Vorrichtung (1100) ferner Folgendes umfasst:
ein Baken-ID-Übersetzungsmodul (1111), das konfiguriert ist, die Positions-ID und das Attribut des empfangenen Bakensignals aus der Bakendefinitionstabelle (1101) zu lesen und die Baken-ID und den Zeitstempel des Empfangs des Bakensignals in die Bakensignal-Managementtabelle (1102) zu schreiben;
ein Bakensignal-Erkennungsmodul (1112), das konfiguriert ist, eine Signalstärke von Baken sich bewegender Gegenstände von Bakensignalen, die von Baken empfangen werden, die auf einem sich bewegenden Gegenstand installiert sind, und eine Signalstärke von Baken ortsfester Gegenstände von Bakensignalen, die von Baken empfangen werden, die auf einem ortsfesten Gegenstand installiert sind, zu bestimmen, wobei die Bakensignalstärke eine Summe einer Anzahl von Baken-ID ist, die in der Bakensignal-Managementtabelle (1102) gespeichert sind, wobei das Bakensignal-Erkennungsmodul (1112) konfiguriert ist, die Signalstärke von Baken sich bewegender Gegenstände durch Zählen der Anzahl von Baken-ID von Bakensignalen, die von sich bewegenden Gegenständen empfangen werden, die in der Bakensignal-Managementtabelle (1102) gespeichert sind, zu bestimmen, und die Signalstärke von Baken ortsfester Gegenstände durch Zählen der Anzahl von Baken-ID von Bakensignalen, die von ortsfesten Gegenständen empfangen werden, die in der Bakensignal-Managementtabelle (1102) gespeichert sind, zu bestimmen;
ein Passagierzustands-Annahmemodul (1113). das konfiguriert ist, einen aktuellen Passagierzustand auf der Grundlage der Signalstärke von Baken sich bewegender Gegenstände, der Signalstärke von Baken ortsfester Gegenstände und/oder eines vorhergehenden Passagierzustands zu bestimmen.

2. Vorrichtung nach Anspruch 1,
wobei das Passagierzustands-Annahmemodul (1113) konfiguriert ist, den aktuellen Zustand des Passagiers auf der Grundlage der Signalstärke von Baken sich bewegender Gegenstände, der Signalstärke von Baken ortsfester Gegenstände, einer Wechselzeit der Signalstärke von Baken sich bewegender Gegenstände, der Signalstärke von Baken ortsfester Gegenstände und/oder des vorhergehenden Passagierzustands zu bestimmen.

3. Vorrichtung nach mindestens einem der vorhergehenden Ansprüche,
wobei das Passagierzustands-Annahmemodul (113) konfiguriert ist, den aktuellen Passagierzustand durch Auswählen eines Passagierzustands aus mehreren vorab definierten Passagierzuständen, die in der Passagierzustands-Definitionstabelle (1103) gespeichert sind, zu bestimmen.

4. Vorrichtung nach Anspruch 3,
wobei die mehreren vorab definierten Passagierzustände jeweils auf der Grundlage einer Kombination eines Absolutwertes der Signalstärke von Baken sich bewegender Gegenstände und/oder eines Absolutwertes der Signalstärke von Baken ortsfester Gegenstände und/oder einer Wechselzeit der Signalstärke von Baken sich bewegender Gegenstände, der Signalstärke von Baken ortsfester Gegenstände und/oder des vorhergehenden Passagierzustands in der Passagierzustands-Definitionstabelle (1103) definiert werden.

5. Vorrichtung nach Anspruch 3 oder 4,
wobei die mehreren vorab definierten Passagierzustände, die in der Passagierzustands-Definitionstabelle (1103) gespeichert sind, "außerhalb", "wartend", "bereit einzusteigen" und "an Bord" enthalten.

6. Vorrichtung nach mindestens einem der vorhergehenden Ansprüche,
wobei die Bakensignal-Managementtabelle (1102) jede Baken-ID auf eine Weise speichert, dass zwischen Baken-ID von einem ortsfesten Gegenstand bzw. von einem sich bewegenden Gegenstand unterschieden wird.

7. Vorrichtung nach mindestens einem der vorhergehenden Ansprüche,
wobei das Baken-ID-Übersetzungsmodul (1111) konfiguriert ist, in ersten vorgegebenen Zeitintervallen periodisch empfangene Bakensignale abzutasten und die Baken-ID und den Zeitstempel des Empfangs in die Bakensignal-Managementtabelle (1102) zu schreiben.

8. Vorrichtung nach mindestens einem der vorhergehenden Ansprüche,
wobei das Bakensignal-Erkennungsmodul (1112) konfiguriert ist, die Bakensignalstärke nach dem Verstreichen eines zweiten vorgegebenen Zeitintervalls, das gleich dem ersten oder länger als das erste vorgegebene Zeitintervall ist, zu bestimmen.

9. Vorrichtung nach mindestens einem der vorhergehenden Ansprüche,
wobei das Bakensignal-Erkennungsmodul (1112) konfiguriert ist, die Bakensignal-Managementtabelle (1102) nach dem Verstreichen eines zweiten vorgegebenen Zeitintervalls zurückzusetzen.

10. Vorrichtung nach mindestens einem der vorhergehenden Ansprüche,
wobei das Bakensignal-Erkennungsmodul (1112) konfiguriert ist, die Bakensignal-Managementtabelle (1102) durch Überschreiben der Baken-ID und der Zeitstempel, die vorher in der Bakensignal-Managementtabelle (1102) gespeichert worden sind, zurückzusetzen.

11. Vorrichtung nach mindestens einem der vorhergehenden Ansprüche,
wobei die Bakensignalstärke durch diskrete Werte dargestellt wird, die von einem Minimum des Wertes null bis zu einem Maximalwert, der der Anzahl der ersten vorgegebenen Zeitintervalle innerhalb des zweiten vorgegebenen Zeitintervalls entspricht, reichen.

12. Vorrichtung nach Anspruch 6,
wobei das Bakensignal-Erkennungsmodul (1112) konfiguriert ist, die Baken-ID jedes Bakensignals, das von dem Mobilgerät empfangen wird, gemäß dem Attribut, das der Baken-ID entspricht, an einem vorgegebenen Speicherort der Signalmanagementtabelle (1102) zu speichern.

13. Vorrichtung nach mindestens einem der vorhergehenden Ansprüche,
wobei das Passagierzustands-Annahmemodul (1113) ferner konfiguriert ist, eine Startzeit als eine erste Zeit, zu der das Passagierzustands-Annahmemodul (1113) den aktuellen Zustand eines Passagiers zu ersten Mal bestimmt, und eine Endzeit als eine Zeit, zu der das Passagierzustands-Annahmemodul (1113) den aktuellen Zustand eines Passagiers zum letzten Mal während einer Reise des Passagiers bestimmt, in einer Passagierzustands-Historientabelle zu speichern, die in der Datenspeichereinheit (1150) umfasst ist.

14. Vorrichtung nach mindestens einem der vorhergehenden Ansprüche, die ferner Folgendes umfasst:
ein Reisebestätigungsmodul (1114), das konfiguriert ist, eine Fahrtbeginnstation als einen Ort, an dem ein Passagier eine Reise beginnt, und eine Fahrtendstation als einen Ort, an dem ein Passagier eine Reise beendet, in einer Reisehistorientabelle (1105) zu speichern, die in der Datenspeichereinheit (1150) umfasst ist.

15. System, das die Vorrichtung (1000) nach mindestens einem der Ansprüche 1 bis 14, ein Passagiermobilgerät (1200), das einen Bakensignaldetektor (1211) umfasst, eine Bake, die auf einem ortsfesten Gegenstand (1300) installiert ist, die konfiguriert ist, ein Bakensignal zu senden, das eine Baken-ID umfasst, und eine Bake, die auf einem sich bewegenden Gegenstand (1400) installiert ist, die konfiguriert ist, ein Bakensignal zu senden, das eine Baken-ID umfasst, enthält.

16. Verfahren zum Bestimmen eines Passagierzustands, das Folgendes umfasst:
Empfangen eines Bakensignals, das eine Baken-ID enthält, von einem Mobilgerät, das das Mobilgerät von einer Bake empfangen hat;
Lesen einer Positions-ID und eines Attributs, das angibt, ob eine Bake auf einem sich bewegenden Gegenstand oder einem ortsfesten Gegenstand installiert ist, die der Baken-ID entsprechen, aus einer Speichereinheit;
Bestimmen einer Bakensignalstärke durch Errichten einer Summe einer Anzahl der empfangenen Baken-ID von den Baken, die auf einem sich bewegenden Gegenstand oder einem ortsfesten Gegenstand installiert sind, während eines vorab definierten Zeitintervalls, wobei eine Signalstärke von Baken sich bewegender Gegenstände durch Zählen einer Anzahl von Baken-ID von Bakensignalen, die von sich bewegenden Gegenständen empfangen werden, während des vorab definierten Zeitintervalls bestimmt wird und eine Signalstärke von Baken ortsfester Gegenstände durch Zählen einer Anzahl von Baken-ID von Bakensignalen, die von ortsfesten Gegenständen empfangen werden, während des vorab definierten Zeitintervalls bestimmt wird;
Speichern der Bakensignalstärke für jedes Bakensignal, das während des vorab definierten Zeitintervalls von einer Bake empfangen wird, die auf einem sich bewegenden Gegenstand oder einem ortsfesten Gegenstand installiert ist, in der Speichereinheit;
Bestimmen des aktuellen Zustands eines Passagiers auf der Grundlage der Bakensignalstärke und/oder einer vorhergehenden Passagierzustands.

17. Computerprogrammprodukt, das in einem Datenspeicher speicherbar ist, das Anweisungen umfasst, die dann, wenn sie durch einen Computer ausgeführt werden, bewirken, dass der Computer das Verfahren nach Anspruch 16 durchführt.

## Revendications

1. Appareil (1000) de détermination d'un état de passager, qui est configuré pour recevoir un signal de balise incluant un ID de balise depuis un dispositif mobile (1200) du passager que le dispositif mobile (1200) a reçu depuis une balise, comprenant :
une unité de stockage de données (1150) configurée pour stocker des informations dans une table de définition de balise (1101), une table de gestion de signal de balise (1102) et une table de définition d'états de passager (1103),
dans lequel la table de définition de balise (1101) est configurée pour stocker un ID de balise, un ID de position indiquant l'emplacement d'une balise et un attribut indiquant si une balise est installée sur un objet mobile ou un objet fixe, et
la table de gestion de signal de balise (1102) est configurée pour stocker l'ID de balise de chaque signal de balise reçu depuis le dispose mobile et un horodatage, et
la table de définition d'états de passagers (1103) est configurée pour stocker des informations concernant un état de passager précédent ou actuel et une force de signal de balise ;
dans lequel l'appareil (1100) comprend en outre :
un module de traduction d'ID de balise (1111) configuré pour lire l'ID de position et l'attribut du signal de balise reçu depuis la table de définition de balise (1101) et pour écrire l'ID de balise et l'horodatage de réception du signal de balise jusque dans la table de gestion de signal de balise (1102) ;
un module de reconnaissance de signal de balise (1112) configuré pour déterminer une force de signal de balise d'objet mobile de signaux de balise reçus depuis des balises installées sur un objet mobile et une force de signal de balise d'objet fixe de signaux de balise reçus depuis des balises installées sur un objet fixe, dans lequel la force de signal de balise est une somme d'un nombre d'ID de balise stockés dans la table de gestion de signal de balise (1102), dans lequel le module de reconnaissance de signal de balise (1112) est configuré pour déterminer la force de signal de balise d'objet mobile en comptant le nombre d'ID de balise de signaux de balise reçus depuis les objets mobiles stockés dans la table de gestion de signal de balise (1102) et la force de signal de balise d'objet fixe en comptant le nombre d'ID de signaux de balise reçus depuis des objets fixes stockés dans la table de gestion de signal de balise (1102) ;
un module de supposition d'état de passager (1113) configuré pour déterminer un état actuel de passager sur la base de la force de signal de balise d'objet mobile, de la force de signal de balise d'objet fixe et/ou d'un état de passager précédent.

2. Appareil selon la revendication 1,
dans lequel le module de supposition d'état de passager (1113) est configuré pour déterminer l'état actuel de passager sur la base de la force de signal de balise d'objet mobile, de la force de signal de balise d'objet fixe, d'un changement dans le temps de la force de signal de balise d'objet mobile, d'une force de balise d'objet fixe et/ou de l'état de passager précédent.

3. Appareil selon l'une au moins des revendications précédentes,
dans lequel le module de supposition d'état de passager (1113) est configuré pour déterminer l'état de passager actuel en sélectionnant un état de passager parmi une pluralité d'états de passager prédéfinis stockés dans la table de définition d'états de passager (1103).

4. Appareil selon la revendication 3,
dans lequel la pluralité d'états de passager prédéfinis sont définis dans la table de définition d'états de passager (1103), chacun étant basé sur une combinaison d'au moins un paramètre parmi une valeur absolue de la force de signal de balise d'objet mobile, une valeur absolue de la force de balise d'objet fixe, un changement dans le temps de la force de signal de balise d'objet mobile, la force de balise d'objet fixe et/ou l'état de passager précédent.

5. Appareil selon la revendication 3 ou 4,
dans lequel la pluralité d'états de passager prédéfinis stockés dans la table de définition d'états de passager (1103) incluent « à l'extérieur », « en attente », « prêt à embarquer » et « à bord ».

6. Appareil selon l'une au moins des revendications précédentes,
dans lequel la table de gestion de signal de balise (1102) stocke chaque ID de balise de manière à faire la distinction entre des ID de balise provenant d'un objet fixe et d'un objet mobile, respectivement.

7. Appareil selon l'une au moins des revendications précédentes,
dans lequel le module de traduction d'ID de balise (1111) est configuré pour échantillonner périodiquement des signaux de balise reçus et pour écrire l'ID de balise et l'horodatage de réception jusque dans la table de gestion de signal de balise (1102) à des premiers intervalles de temps prédéterminés.

8. Appareil selon l'une au moins des revendications précédentes,
dans lequel le module de reconnaissance de signal de balise (1112) est configuré pour déterminer la force de signal de balise après expiration d'un second intervalle de temps prédéterminé qui est égal au premier intervalle de temps prédéterminé ou plus long que celui-ci.

9. Appareil selon l'une au moins des revendications précédentes,
dans lequel le module de reconnaissance de signal de balise (1112) est configuré pour réinitialiser la table de gestion de signal de balise (1102) après expiration d'un second intervalle de temps prédéterminé.

10. Appareil selon l'une au moins des revendications précédentes,
dans lequel le module de reconnaissance de signal de balise (1112) est configuré pour réinitialiser la table de gestion de signal de balise (1102) en écrasant les ID de balise et les horodatages stockés au préalable dans la table de gestion de signal de balise (1102).

11. Appareil selon l'une au moins des revendications précédentes,
dans lequel la force de signal de balise est représentée par des valeurs discrètes allant depuis un minimum de la valeur de zéro jusqu'à une valeur maximum qui correspond au nombre de premiers intervalles de temps prédéterminés à l'intérieur du second intervalle de temps prédéterminé.

12. Appareil selon la revendication 6,
dans lequel le module de reconnaissance de signal de balise (1112) est configuré pour stocker l'ID de balise de chaque signal de balise reçu depuis le dispositif mobile dans un emplacement de stockage prédéterminé de la table de gestion de signal (1102) en fonction de l'attribut correspondant à l'ID de balise.

13. Appareil selon l'une au moins des revendications précédentes,
dans lequel le module de supposition d'état de passager (1313) est en outre configuré pour stocker un temps de départ à titre de premier temps quand le module de supposition d'état de passager (1113) détermine un état actuel de passager pour le premier temps et un temps de fin à titre de temps où le module de supposition d'état de passager (1113) détermine un état actuel de passager pour le dernier temps pendant un voyage de passager dans une table d'historique d'état de passager comprise dans l'unité de stockage de données (1150).

14. Appareil selon l'une quelconque au moins des revendications précédentes comprenant en outre
un module de confirmation de voyage (1114) configuré pour stocker une station de départ de circulation à titre d'emplacement où un passager commence un voyage et une station de fin de circulation à titre d'emplacement où un passager termine un voyage dans une table d'historique de voyage (1105) comprise dans l'unité de stockage de données (1150).

15. Système qui inclut l'appareil (1000) selon l'une au moins des revendications 1 à 14, un dispositif mobile de passager (1200) comprenant un détecteur de signal de balise (1211), une balise installée sur un objet fixe (1300) configurée pour envoyer un signal de balise comprenant un ID de balise et une balise installée sur un objet mobile (1400) configurée pour envoyer un signal de balise comprenant un ID de balise.

16. Procédé de détermination d'un état de passager comprenant les étapes consistant à :
recevoir, depuis un dispositif mobile, un signal de balise incluant un ID de balise que le dispositif a reçu depuis une balise ;
lire un ID de position et un attribut correspondant à l'ID de balise indiquant si une balise est installée sur un objet mobile ou un objet fixe depuis une unité de stockage ;
déterminer une force de signal de balise en élaborant une somme d'un nombre des ID de balise reçus depuis les balises qui sont installées sur un objet mobile ou un objet fixe pendant un intervalle de temps prédéfini, dans lequel une force de signal de balise d'objet mobile est déterminée en comptant un nombre d'ID de balise de signaux de balise reçus depuis des objets mobiles pendant l'intervalle de temps prédéfini et une force de signal de balise d'objet fixe est déterminée en comptant un nombre d'idées de balise de signal de balise reçus depuis des objets fixes pendant l'intervalle de temps prédéfini,
stocker la force de signal de balise pour chaque signal de balise reçu depuis une balise installée sur un objet mobile ou un objet fixe pendant l'intervalle de temps prédéfini dans l'unité de stockage ;
déterminer un état actuel de passager sur la base de la force de signal de balise et/ou d'un état de passager précédent.

17. Produit de programme d'ordinateur pouvant être stocké dans une mémoire comprenant des instructions qui, quand elles sont exécutées par un ordinateur, amènent l'ordinateur à effectuer le procédé selon la revendication 16.
